Europäisches Patentamt

European Patent Office

Office européen des brevets

(11) Veröffentlichungsnummer: **0 234 410**
**A2**

(12) **EUROPÄISCHE PATENTANMELDUNG**

(21) Anmeldenummer: **87101899.0**

(22) Anmeldetag: **11.02.87**

(51) Int. Cl.⁴: **G05G 11/00 , //A01B63/111**

(30) Priorität: **22.02.86 DE 3605779**

(43) Veröffentlichungstag der Anmeldung:
**02.09.87 Patentblatt 87/36**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Magin, Ludwig Bernhard, Dipl.-Ing.**
**(FH)**
**Keltenstrasse 22**
**D-6707 Schifferstadt(DE)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Fernbetätigungseinrichtung.**

(57) Eine Fernbetätigungseinrichtung (30) zum Bedienen eines in einer Kabine (12) eines Ackerschleppers (10) angeordneten Hauptbedienungshebels (26) eines Krafthebers mittels eines außerhalb der Kabine (12) angeordneten Nebenbedienungshebels (60) weist ein Sperrmittel (90) auf, das in eine den Hauptbedienungshebel (26) führende Aussparung (36) eingreift, sobald der Hauptbedienungshebel (26) in einen Regelbereich (56) geführt werden soll, in dem eine unkontrollierte Funktion des Krafthebers stattfinden kann.

FIG.2

## Fernbetätigungseinrichtung

Der Erfindung betrifft eine Fernbetätigungseinrichtung, insbesondere für einen Kraftheber eines Ackerschleppers, mit einem Hauptbedienungshebel und einem Nebenbedienungshebel, die über ein Verbindungsglied miteinander verbunden sind, wobei ein Anschlag zur Begrenzung des Weges des Hauptbedienungshebels vorgesehen ist.

Fernbetätigungseinrichtungen sind für die vielfältigsten Zwecke bekannt. So ist in der EP-A2-0 131 711 eine Fernbe-tätigungseinrichtung für einen Hauptbedienungshebel einer Dreipunktgerätekupplung eines Ackerschleppers beschrieben, die dazu benutzt wird, den in einer Fahrerkabine des Ackerschleppers angeordneten Hauptbedienungshebel von außerhalb der Fahrerkabine zu verstellen, so daß zu der Dreipunktgerätekupplung gehörige untere Lenker angehoben oder abgesenkt werden können, ohne daß eine Bedienungsperson auf den Ackerschlepper aufsteigen muß. In einem derartigen Anwendungsfall ist jedoch zu berücksichtigen, daß, je nach Ausführung der Steuer-und Regelvorrichtung der Dreipunktgerätekupplung, der Hauptbedienungshebel gegebenenfalls nur in einem bestimmten Bereich bewegt werden darf. Dies ist unter anderem davon abhängig, ob die Regelvorrichtung eine Lageregelung und eine Zugwiderstandsregelung durchführen kann oder nicht. Ausgehend von einer Bauart der Steuer-und Regelvorrichtung, bei der bei Wahl der Lageregelung der Hauptbedienungshebel bei seiner Verstellung über den ganzen Bereich eine proportionale Bewegung der unteren Lenker bewirkt und bei Wahl der Zugwiderstandsregelung der Hebel bei seiner Verstellung in einem anfangs gelegenen Leerbereich keine und in einem daran anschließenden Regelbereich, sofern an dem unteren Lenker keine Zugbelastung herrscht, eine unkontrollierte Bewegung der unteren Lenker bewirkt, ist darauf zu achten, daß der Hebel nicht in den Regelbereich durch den Nebenbedienungshebel gebracht werden kann, wenn als Regelart die Zugwiderstandsregelung gewählt ist. Dieser Sicherheitsaspekt ist notwendig, um zu vermeiden, daß eine neben einem an den Ackerschlepper anzuhängenden Gerät stehende Person durch das unkontrollierte Anheben der unteren Lenker einer ungewollte Bewegung mit dem Gerät durchführt, durch welche sie verletzt oder das Gerät beschädigt wird. Bei dieser bekannten Fernbetätigungseinrichtung ist ein Mitnehmer als Zahnrad und ein Übertragungsglied als Zahlstange mit einem Bowdenzug ausgebildet. Das Zahnrad ist nur auf einem Teil seines Umfanges mit Zähnen versehen und in einem Gehäuse drehbar gelagert.

Es steht mit der Zahnstange grundsätzlich in Eingriff und kann mit dem Nebenbedienungshebel über eine einfache Zapfenverbindung entgegen der Wirkung eines Federelementes verbunden werden. Die Zahnstange nimmt die Form und die Funktion eines Schlittens ein, der in dem Gehäuse durch ein Verdrehen des Zahnrades längsverschiebbar ist und dabei den Bowdenzug verstellt. An dem Gehäuse sind zwei Anschläge vorgesehen, die den Schwenkbereich des Nebenbedienungshebels auf einen vorbestimmten Bereich, der dem Leerbereich entspricht, beschränken. In einer anderen Ausführungsform dieser Fernbetätigungseinrichtung rastet eine Klinke in das Zahnrad ein, sobald die Zahnstange sich am Ende des Leerbereiches befindet. Die Klinke wird dann in einer speziellen Ausnehmung in dem Schlitten während dessen weiterer von dem Hebel ausgehender Verschiebung gehalten, so daß das Zahnrad weder vorwärts noch rückwärts gedreht werden kann.

Dieser Fernbetätigungseinrichtung haftet der Nachteil an, daß die Zapfenverbindung umgangen werden kann, indem der Nebenbedienungshebel seitlich an den Zapfen angelegt wird, und somit die Drehbewegung des Zahnrades der Schwenkbewegung des Nebenbedienungshebels voreilt und die Zahnstange über den vorbestimmten Bereich hinaus bewegt wird. Desgleichen kann der Nebenbedienungshebel auch reibschlüssig an das Zahnrad gedrückt werden und somit die Zahnstange über den vorbestimmten Bereich hinaus verschoben werden.

Zwar wird dieser Nachteil bei der Ausführung mit der Klinke vermieden. Der fertigungstechnische Aufwand zum Halten der Klinke in der das Zahnrad haltenden Stellung ist jedoch ungerechtfertigt hoch. Ferner kann nach langer Gebrauchszeit nicht ausgeschlossen werden, daß aufgrund einer rauhen Bedienungsweise und/oder von Verschleiß an dem Zahnrad, der Zahnstange und der Klinkenspitze dieses Gesperre nicht mehr richtig funktioniert und zu einer Blockage der Fernbetätigungseinrichtung führt.

Allen diesen vorbeschriebenen und bekannten Ausführungen ist zudem gemein, daß bei einer unsachgemäßen Montage das Zahnrad gegenüber der Zahnstange versetzt werden kann, so daß gewollt oder ungewollt eine Verlagerung des gewollten Bereiches möglich ist.

Die der Erfindung zugrunde liegende Aufgabe wird darin gesehen, die Fernbetätigungseinrichtung derart zu verbessern, daß sie unanfälliger und einfacher wird und mittels eines herkömmlichen Verbindungsgliedes bedient werden kann.

Diese Aufgabe ist erfindungsgemäß dadurch gelöst worden, daß der Anschlag in die Bewegungsbahn des Hauptbedienungshebels einführbar ist.

Auf diese Weise kann der Hauptbedienungshebel von dem Nebenbedienungshebel aus über ein gewöhnliches Verbindungsglied, etwa einen Bowdenzug oder ein Gestänge, verstellt werden. Somit entfällt insbesondere der an der bisherigen Fernbetätigungseinrichtung vorgesehene Anschlag, und der nun in die Bewegungsbahn eintretende Anschlag ist einfacher zu bemessen, da an der Bewegungsbahn einfach der Regelbereich ermittelt werden kann und somit der Anschlag entweder an dem Übergangsbereich zwischen dem Leerbereich und dem Regelbereich angeordnet wird oder aber die Länge des Regelbereiches einnimmt und somit die Bewegungsbahn ab dem Leerbereich einnimmt.

Eine vorteilhafte Möglichkeit zum Verkürzen der Bewegungsbahn des Hauptbedienungshebels kann bei einem in einer Aussparung einer Kulisse geführten Hauptbedienungshebel darin gesehen werden, daß der Anschlag an dem Hauptbedienungshebel beweglich angebracht und in die Aussparung einfügbar ist. Dieses Merkmal offenbart die Möglichkeit, die Bedienung des Anschlages gemeinsam mit der Verstellung des Hauptbedienungshebels durch das Verbindungsglied vorzunehmen, wobei es am wirkungsvollsten und sichersten ist, wenn der Anschlag in Abhängigkeit von der Stellung oder einem Bewegungszustand des Nebenbedienungshebels bedienbar ist. Dies ist etwa dadurch zu verwirklichen, daß die Betätigungen des Anschlages und des Hauptbedienungshebels zueinander in Reihe geschaltet werden, so daß zuerst der Anschlag eingerückt und anschließend der Hauptbedienungshebel bewegt wird.

Präventive Sicherheit bietet aber auf jeden Fall das Merkmal, wonach der Anschlag ständig in eine den Weg des Hauptbedienungshebels begrenzende Stellung gedrängt angeordnet ist und lediglich vom Hauptbedienungshebel aus aus seiner den Weg begrenzenden Stellung bringbar ist. Die Sicherheit liegt vor allem darin, daß die Bedienungsperson den Anschlag nicht aus der Bewegungsbahn vom Standpunkt bei dem anzuhängenden Gerät aus bringen kann, da sie den Hauptbedienungshebel überhaupt nicht erreichen kann, sonst wäre sie ohnehin nicht auf die Fernbetätigungseinrichtung angewiesen. Außerdem muß stets der Wille der Bedienungsperson vorhanden sein, den Anschlag zu bewegen. Vergißt sie es, den Anschlag aus der Bewegungsbahn zu bringen, dann kann nicht mehr geschehen, als daß eine Verringerung des Hubbereiches des Krafthebers eintritt.

Im einzelnen könnte eine hervorragende Ausbildung eines Verbindungsgliedes derart aussehen, daß es einen ersten und einen zweiten Teil enthält, die zwischen einer ersten und einer zweiten Stellung relativ zueinander beweglich sind, daß der dem Nebenbedienungshebel zugeordnete erste Teil mit dem Anschlag verbunden ist und daß das Maß der Relativbewegung dem Maß zum Einfügen des Anschlages in die Bewegungsbahn des Hauptbedienungshebels entspricht, wobei sich eine eindeutige Stellung der beiden Teile zueinander automatisch ergibt, wenn zwischen dem ersten und dem zweiten Teil eine Feder wirkt, die die beiden Teile in eine Stellung zueinander bringt, derart, daß der Anschlag in die den Weg des Hauptbedienungshebels begrenzende Stellung gelangt, wenn der Nebenbedienungshebel betätigt wird. Insbesondere die Verwendung der Feder nach diesem die Erfindung fortentwickelnden Merkmal gewährleistet, daß die Funktion des Hauptbedienungshebels nicht beeinträchtigt wird, solange der Nebenbedienungshebel nicht betätigt wird. Wie der erste und der zweite Teil in einfacher und kostengünstiger Weise ausgeführt sein können, geht insbesondere aus den Ansprüchen 7 und 8 hervor. Jedoch brauchen der erste und der zweite Teil nicht in einem Bowdenzug oder dergleichen verwirklicht zu sein, sondern sie können auch als Adapter einfach an diesen angeschraubt werden.

Die Ausbildung eines ständig in die Bewegungsbahn eingeschobenen Anschlages kann dergestalt sein, daß der Anschlag an einer den Hauptbedienungshebel teleskopartig übergreifenden Griffhülse angeordnet ist, die zwischen einer ersten und einer zweiten Stellung auf dem Hauptbedienungshebel beweglich ist und entgegen der Wirkung einer Feder aus der den Weg des Hauptbedienungshebels begrenzenden Stellung in der Aussparung bewegbar ist. Hieraus folgt, daß die Bedienungsperson auf jeden Fall eine Aktion durchführen muß, um den Anschlag aus der Bewegungsbahn zu entfernen. Ein zufälliges oder gelegentliches Ergreifen des Hauptbedienungshebels reicht nicht aus, um ihn in den Regelbereich verschwenken zu können. Die beiden Stellungen lassen sich problemlos dadurch festlegen, daß die Griffhülse einen Längsschlitz und der Hauptbedienungshebel einen Stift aufweisen, wobei er Stift in dem Längsschlitz aufgenommen ist, und die Ausbildung und Anordnung des Längsschlitzes die erste und die zweite Stellung der Griffhülse bestimmen.

Bei einer Fernbetätigungseinrichtung für eine eine Lage-, eine Zugwiderstands-und eine Mischregelung aufweisende Regelvorrichtung des Krafthebers des Ackerschleppers, wobei in der Aussparung ein Regelbereich für die Zugwiderstandsund die Mischregelung vorgesehen ist, wird der Regelbereich für die Zugwiderstandsregelung dadurch gesperrt, daß nach einem weiteren die Erfindung ausgestaltenden Merkmal die Griffhülse an einem unteren und der Aussparung zugewandten Endbereich den Anschlag aufweist, der in seiner Länge dem Regelbereich entspricht, wobei eine derartige Ausbildung auch auf den an dem Hauptbedienungshebel schwenkbar angebrachten Anschlag analog anwendbar ist.

In der Zeichnung sind zwei nachfolgend näher beschriebene Ausführungsbeispiele der Erfindung dargestellt. Es zeigt:

Figur 1 in schematischer Darstellung einen Ackerschlepper mit einem Teil einer Fernbetätigungseinrichtung,

Figur 2 die Fernbetätigungseinrichtung in einer Außerbetriebsstellung in Seitenansicht und teilweise im Schnitt,

Figur 3 einen Abschnitt eines Verbindungsgliedes der Fernbetätigungseinrichtung in einer Betriebsstellung und im Schnitt,

Figur 4 einen Hauptbedienungshebel für eine weiter Fernbetätigungseinrichtung und

Figur 5 einen Schnitt durch den Hauptbedienungshebel nach Figur 4 gemäß der dort gezeigten Linie und Pfeile.

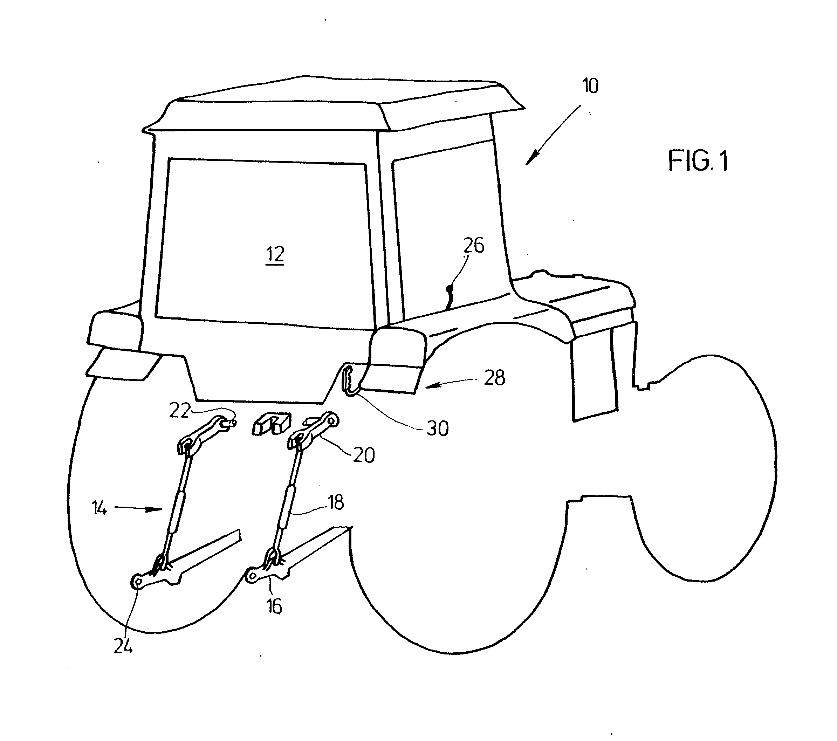

Ein in Figur 1 mit seinen Umrissen angegebener Ackerschlepper 10 mit einer Kabine 12 ist an seinem rückwärtigen Ende mit einer Dreipunktgerätekupplung 14 versehen, mittels derer eine Verbindung zu einem anzuhängenden, jedoch nicht dargestellten Gerät hergestellt werden kann. Bei dem Gerät kann es sich um einen Pflug, eine Sämaschine, eine Egge oder eine sonstige Maschine handeln.

Die Dreipunktgerätekupplung 14 weist hierzu zwei untere Lenker 16 auf, die über Hubstreben 18 und Hubarme 20 mit einer Hubwelle 22 verbunden sind und geräteseitig Kugelösen 24 aufweisen. Die Hubwelle 22 selbst kann über einen nicht dargestellten, an ihr exzentrisch angreifenden Hubzylinder verdreht werden, während die unteren Lenker 16 um einen in der Zeichnung nicht ersichtlichen Federstab vertikal · schwenken können. Die Schwenkbewegung wird dabei von der drehenden Hubwelle 22 bewirkt und über die Hubarme 20 und die Hubstreben 18 auf die unteren Lenker 16 übertragen. Ferner gehört zu der Dreipunktgerätekupplung 14 ein in die Zeichnung nicht aufgenommener oberer Lenker, über den das angehängte Gerät während des Schwenkvorgangs der unteren Lenker 16 in einer senkrechten oder annähernd senkrechten Lage gehalten wird.

Zur Steuerung der Drehung der Hubwelle 22 ist eine nicht bezeichnete Steuervorrichtung mit einem Hauptbedienungshebel 26 in der Kabine 12 in dem Ackerschlepper 10 vorgesehen.

Der Steuervorrichtung ist eine ebenfalls nicht gezeigte Regelvorrichtung überlagert, die es ermöglicht, das angehängte Gerät mindestens analog einer Lageregelung und einer Zugwiderstandsregelung zu führen. Gegebenenfalls kann auch eine Mischung beider Regelarten, nämlich eine Mischregelung, vorgesehen sein. Hierbei bedeutet Lageregelung, daß das angehängte Gerät stets in der gleichen vertikalen Stellung gegenüber dem Ackerschlepper 10 gehalten wird, wobei diese über die Stellung des Hauptbedienungshebels 26 direkt bestimmt wird, so daß das angehängte Gerät stets die gleiche Arbeitstiefe beibehält. Zugwiderstandsregelung dagegen bedeutet, daß das angehängte Gerät stets eine Arbeitstiefe einhält, die einem bestimmten Zugwiderstand beim Ziehen durch den Boden entspricht. Der Zugwiderstand wird durch eine proportionale Verbiegung des Federstabes auf die Regelvorrichtung übertragen und bewirkt dort die Einleitung eines Hub-oder Senkvorganges der Dreipunktgerätekupplung 14.

Der Hauptbedienungshebel 26 ist in bekannter Ausführung in einer Aussparung 3 einer Kulisse 38 geführt und innerhalb eines vorgegebenen Bereichs bewegbar. Ist als Regelungsart die Lageregelung gewählt, dann erfolgt proportional zu dem Weg des Hauptbedienungshebels 26 in der Aussparung 36 ein Anheben oder Absenken der unteren Lenker 16, und zwar so, daß sich die unteren Lenker 16 in ihrer untersten Stellung befinden, wenn der Hauptbedienungshebel 26 am vorderen Ende der Aussparung 36 anliegt, und ihre oberste Stellung einnehmen, wenn sich der Hauptbedienungshebel 26 an dem rückwärtigen Ende der Aussparung 36 befindet.

Hingegen unterteilt sich der Bereich in einem Leerbereich 54 und in einen Regelbereich 56, wenn als Regelart die Zugwiderstandsregelung gewählt ist, wobei sich der Leerbereich 54 von dem vorderen Ende der Aussparung 36 und der Regelbereich 56 von dem rückwärtigen Ende der Aussparung 36 aus erstrecken. Eine Verstellung des Hauptbedienungshebels 26 in dem Leerbereich 54, solange die Zugwiderstandsregelung gewählt ist, bleibt ohne Wirkung auf die Dreipunktgerätekupplung 14. Eine Verstellung des Hauptbedienungshebels 26 in dem Regelbereich 56 führt zu einem unkontrollierten Anheben bzw. Absenken der unteren nicht belasteten Lenker 16, da deren vertikale Schwenkbewegung in der Zugwiderstandsregelung fast ausschließlich in Abhängigkeit von den durch den Federstab oder ein sonstiges Zugwiderstandsübertragungsglied erfahrenen Impulsen erfolgt.

Schließlich ist in einem rückwärtigen Außenbereich 28 des Ackerschleppers 10 eine Fernbetätigungseinrichtung 30 vorgesehen, die über ein Verbindungsglied 32 in der Form eines Bowdenzugs oder eines sonstigen Gestänges mit dem Hauptbedienungshebel 26 verbunden ist und auf diesen eine Bewegung übertragen kann, so daß die unteren Lenker 16 der Dreipunktgerätekupplung 14 nicht nur von der Kabine 12 aus über den Hauptbedienungshebel 26 direkt, sondern auch von außerhalb der Kabine 12 mittelbar über die Fernbetätigungseinrichtung 30 angehoben bzw. abgesenkt werden können. Dies ist insbesondere wichtig, um die Höhe der unteren Lenker 16 auf die richtige Ankuppelhöhe beim Anhängen des Gerätes bringen zu können, was von der Kabine 12 aus unter Umständen sehr schwierig ist, aber sehr leicht durchgeführt werden kann, wenn eine die Dreipunktgerätekupplung 14 bedienende Person direkt neben dem anzuhängenden Gerät steht. Um jedoch zu vermeiden, daß über die Fernbetätigungseinrichtung 56 bewegt wird, wenn als Regelart die Zugwiderstandsregelung gewählt ist, ist die Fernbetätigungseinrichtung 30 bzw. der Hauptbedienungshebel 26 wie aus den folgenden Figuren ersichtlich ausgebildet.

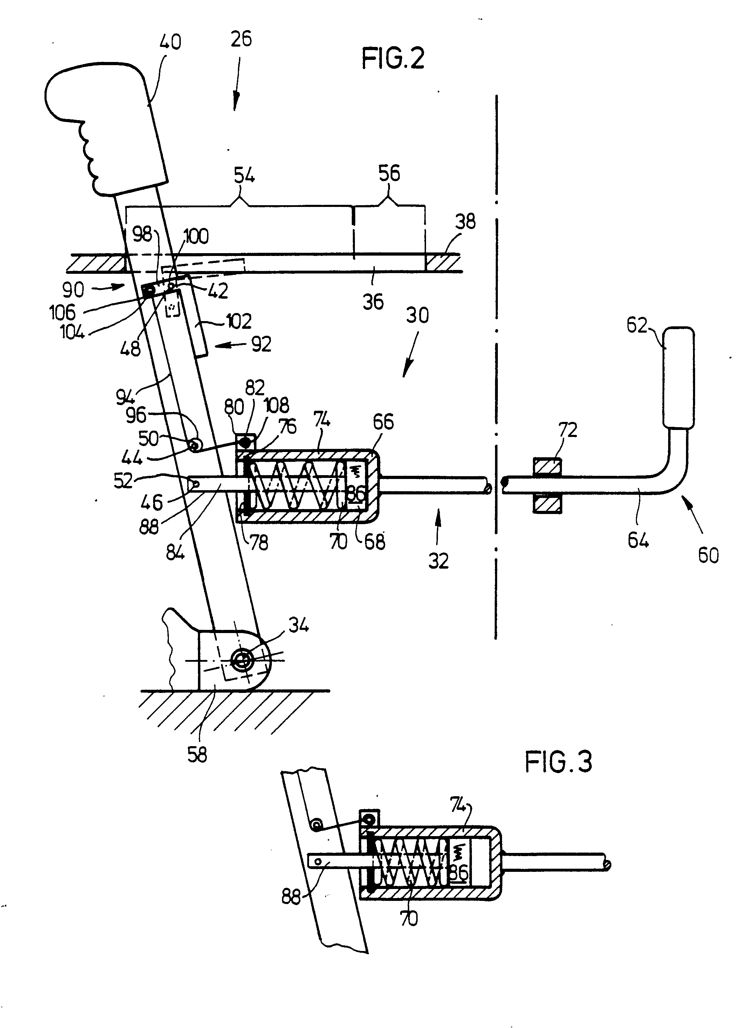

Aus Figur 2 ist die gesamte Fernbetätigungseinrichtung 30 ersichtlich, wobei die sonstigen Teile des Ackerschleppers 10 vernachlässigt worden sind. Es ist zu erkennen, daß der Hauptbedienungshebel 26 an seinem unteren Endbereich mit einer über den Hauptbedienungshebel 26 schwenkbaren Welle 34 verbunden ist, die direkt oder indirekt auf nicht ersichtliche Hub- und Senkventile eines der Dreipunktgerätekupplung 14 zugeordneten Krafthebers wirkt, um so ein Anheben oder Absenken der unteren Lenker 16 hervorzurufen. An seinem oberen Endbereich ist der Hauptbedienungshebel 26 in der Aussparung 36 der in der Kabine 12 normalerweise rechts eines nicht erkennbaren Fahrensitzes angeordneten Kulisse 38 quer zu seiner Schwenkrichtung, die in der Zeichenebene liegt, geführt. Ein sich oberhalb der Kulisse 38 befindlicher Abschnitt des Hauptbedienungshebels 26 ist mit einem Griff 40 versehen, der fest auf dem Hauptbedienungshebel 26 angeordnet ist. Zwischen dem oberen und dem unteren Endbereich sind in den Hauptbedienungshebel 26 eine obere, eine mittlere und eine untere Bohrung 42, 44 und 46 eingebracht, die jeweils der Aufnahme eines oberen, eines mittleren und eines unteren Stiftes 48, 50 und 52 dienen, deren Funktion weiter unten noch eingehend erläutert wird.

Die Aussparung 35 läßt sich, wenn als Regelart die Zugwiderstandsregelung gewählt ist, in der Schwenkebene des Hauptbedienungshebels 26 in die Bereiche Leer- und Regelbereich 54 und 56 aufteilen. Sie weist ferner eine bestimmte Breite auf, die zumindest der Breite des Hauptbedienungshebels 26 entspricht.

Die Welle 34 ist starr, gegebenenfalls aber lösbar mit dem Hauptbedienungshebel 26 verbunden und in einem Halter 58 gelagert. Im übrigen entspricht sie herkömmlichen Wellen zum Bedienen von Hub- und Senkventilen und braucht daher nicht weiter beschrieben zu werden.

In Figur 2 ist ferner ein Nebenbedienungshebel 60 der Fernbetätigungseinrichtung 30 gezeigt, der mit einem Handgriff 62 versehen ist und der von dem rückwärtigen Außenbereich 28 des Ackerschleppers 10 aus betätigt werden kann. Das sich in diesem Ausführungsbeispiel zwischen dem Haupt- und dem Nebenbedienungshebel 26 und 60 erstreckende Verbindungsglied 32 besteht im wesentlichen aus einer Stange 64, einem ersten Teil 66, einem zweiten Teil 68 und einer Feder 70, die hier als Schraubendruckfeder geformt ist, während der erste Teil 66 als Zylinder und der zweite Teil 68 als Kolben ausgeführt sind.

Die Stange 64 ist im Bereich des Handgriffes 62 abgekröpft und in einem am rückwärtigen Außenbereich 28 vorgesehenen Lager 72 gleitend geführt. An ihrem dem Handgriff 62 abge legenen, in der Zeichnung linken und an dem Ackerschlepper 10 vorne gelegenen Ende ist sie mit einem geschlossenen Ende des ersten Teils 66 verschweißt oder an dieses angeschraubt. Wie jedoch zuvor schon ausgeführt, können die Stange 64 und der Handgriff 62 auch durch einen Bowdenzug ersetzt werden, wobei dann dem Lager 72 die Aufgabe zukäme, den Bowdenzug unmittelbar vor dem ersten Teil 66 an dem rückwärtigen Außenbereich 28 festzulegen. Ein in dem Bowdenzug sich befindliches Seil würde dann an dem ersten Teil 66 befestigt werden, um eine Bewegung von dem Handgriff 62 auf den ersten Teil 66 zu übertragen.

Der erste Teil 66 besteht aus einem runden, innenhohlen Gehäuse 74, das an dem rechten Ende geschlossen und an dem linken Ende offen ist, wobei auf der Innenseite am linken Ende eine Nut 76 zur Aufnahme eines Halteelements 78 in der Art eines Sicherungsringes eingearbeitet ist. Ebenfalls an dem linken Endbereich, nun jedoch auf der Außenseite des Gehäuses 74, ist eine Lasche 80 mit einer Bohrung 82 vorgesehen, deren Sinn später erläutert wird.

Der zweite Teil 68 wird gebildet aus einer Kolbenstange 84 und einem mit dieser verbundenen Kolbenboden 86, wobei der Kolbenboden 86 an der Innenseite des Gehäuses 74 und die Kolbenstange 84 in dem Halteelement 78 geführt ist. Die Kolbenstange 84 ist an ihrem aus dem Gehäuse 74 austretenden Endbereich gegabelt, woraus sich zwei Schenkel 88 bilden, in die zwei miteinander fluchtende, nicht näher gezeigte Bohrungen eingebracht sind, durch die sich der untere Stift 52 erstreckt, so daß eine Schwenkverbindung zwischen dem Hauptbedienungshebel 26 und dem zweiten Teil 68 entsteht.

Die Feder 70 ist zwischen das Halteelement 78 und die der Kolbenstange 84 zugewandte Fläche des Kolbenbodens 86 unter geringer Vorspannung eingesetzt und drängt den zweiten Teil 68 stets in das Gehäuse 74. Die Federkraft dieser Feder 70 ist so ausgelegt, daß die entweder vollkommen, mindestens aber um einen vorbestimmten Betrag, zusammendrückbar ist, bevor der Hauptbedienungshebel 26 über das Verbindungsglied 32 bewegt werden kann. Dies bedeutet, daß die maximale Federkraft, um einen vorbestimmten Federweg zu erreichen, geringer sein muß als die Reibkraft, die sich aus der Bewegung des Hauptbedienungshebels 26 ergibt. Mann kann bei den herkömmlichen Befestigungen der Hauptbedienungshebel 26 davon ausgehen, daß die Federkonstante der Feder 70 relativ gering ist.

Schließlich ist ein Sperrmechanismus 90 vorgesehen, der aus einem Sperrglied 92, einem Zugmittel 94 und einer Umlenkrolle 96 besteht.

Das Sperrglied 92 setzt sich aus einem den Hauptbedienungshebel 26 seitlich umgebenden Gabelende 98 mit zwei miteinander fluchtenden Öffnungen 100 und einem Anschlag 102 in der Art einer Sperrnase zusammen, der sich zu dem Gabelende 98 ungefähr im rechten Winkel erstreckt und dessen Breite etwas geringer ist als die Breite der Aussparung 36 in der Kulisse 38. Durch die beiden Öffnungen 100 hindurch erstreckt sich der obere Stift 48 und stellt somit eine Schwenkverbindung zwischen dem Hauptbedienungshebel 26 und dem Sperrglied 92 her. Einer der Schenkel 88 ist zusätzlich mit einer Gewindebohrung 104 versehen.

Das Zugmittel 94 ist in sich sehr nachgiebig und kann entweder als Stahl-, Kupfer-oder Kunststoffseil ausgebildet sein und ist an seinen oberen und unteren Endbereichen mit jeweils einer Öse 106 und 108 versehen, wobei die obere Öse 106 über eine nicht gezeigte und in die Gewindebohrung 104 eingeschraubte Schraube mit dem Sperrglied 92 schwenkbar verbunden ist. Die untere Öse 108 hingegen greift über einen ebenfalls nicht dargestellten Stift an der Lasche 80 des Gehäuses 74 schwenkbar an.

Die Umlenkrolle 96 ist über den mittleren Stift 50 drehbar an dem Hauptbedienungshebel 26 angebracht und nimmt auf ihrer Außen-, also ihrer Führungsseite, das Zugmittel 94 zwischen seinen Ösen 106 und 108 auf.

Anhand des Vorbeschriebenen ergibt sich folgende Funktion der Fernbetätigungseinrichtung 30, wobei im weiteren von einer Anfangssituation ausgegangen wird, in der der Nebenbedienungshebel 60 nicht betätigt worden ist. In einer derartigen Ausgangssituation wird der zweite Teil 68 bis zur Anlage des Kolbenbodens 86 an dem geschlossenen Ende des Gehäuses 74 gedrückt, was bewirkt, daß die Stange 64 auf den Hauptbedienungshebel 26 zubewegt wird, da die Reibung in dem Lager 72 geringer ist oder gegebenenfalls geringer gehalten werden muß als die Reibung zum Verschwenken des Hauptbedienungshebels 26. Dadurch herrscht in dem Zugmittel 94 keine Spannung, und das Sperrglied 92 schwenkt aufgrund der Scherkraft im den oberen Stift 48 mit dem Anschlag 102 nach unten und somit aus der Aussparung 36 heraus. Gegebenenfalls kann zur Sicherstellung dieser Bewegung des Sperrgliedes 92 zwischen dem Anschlag 102 und dem Hauptbedienungshebel 26 eine weitere Feder vorgesehen werden, die den Anschlag 102 stets auf den Hauptbedienungshebel 26 drängt, die aber eine sehr geringe Federkonstante aufweisen sollte. In dieser Ausgangssituation kann der Hauptbedienungshebel 26 direkt uneingeschränkt in beiden Richtungen verschwenkt werden. Wird er nämlich mit Blick auf Figur 2 im Uhrzeigerdrehsinn geschwenkt, um also einen Hubvorgang auszulösen, dann drückt der Hauptbedienungshebel 26 über den zweiten Teil 68 auf den ersten Teil 66 und dieser auf die Stange 64 mit dem Nebenbedienungshebel 60. Wird er oben nach links bewegt, um einem Senkvorgang einzuleiten, dann wird zwar die Feder 70 zusammengedrückt, der Sperrmechanismus 90 kann aber nicht wirken, da der Anschlag 102 nur bei der Bewegung des Hauptbedienungshebels 26 oben nach rechts wirkt. Es wird ferner vorausgesetzt, daß als Regelart die Zugwiderstandsregelung gewählt ist und sich der Hauptbedienungshebel 26 in dem Leerbereich 54, vorzugsweise an dessen Anfang, befindet, so daß die unteren Lenker 16 ihre unterste Stellung einnehmen. Es sei hierbei bemerkt, daß sich der Hauptbedienungshebel 26 ohnehin in dem Leerbereich 54 befinden wird, da in dem Falle, daß er sich in dem Regelbereich 56 befindet, die unteren Lenker 16 bis in ihre oberste Stellung angehoben werden und dann ein weiteres Anheben und ein Anhängen eines Gerätes sowieso nicht möglich wäre.

Unter diesen Voraussetzungen wird nun der Ackerschlepper 20 rückwärts von einer Person an ein anzuhängendes nicht gezeichnetes Gerät, beispielsweise an eine Scheibenegge, herangefahren. Sobald der Abstand zwischen dem Ackerschlepper 10 und der Scheibenegge ausreicht, um diese mit den unteren Lenkern 16 zu verbindin, wird der Ackerschlepper 10 angehalten und die unteren Lenker 16 so weit nach oben verfahren, daß die Kugelösen 24 etwa in der gleichen Höhe wie die Ankuppelpunkte an der Scheibenegge liegen. Insbesondere bei Ackerschleppern 10 mit einer Kabine 12, die die Einsicht des Ankuppelbereichs einschränkt, kann die Person oft nur schätzen, ob die Höhe der Kugelösen 24 der Höhe der Ankuppelpunkte an der Scheibenegge entspricht. Anschließend wird die Person von dem Ackerschlepper 10 absteigen und nach hinten gehen, um die unteren Lenker 16 mit den Kugelösen 24 über an der Scheibenegge vorgesehene Anhängebolzen zu schieben. Befinden sich die Kugelösen 24 nun unterhalb der Anhängebolzen, dann wird die Person über den Nebenbedienungshebel 60 und das Verbindungsglied 32 den Hauptbedienungshebel 25 verschwenken.

Dabei spielen sich folgende Vorgänge ab. Beim Ziehen des Nebenbedienungshebel 60, um den Hauptbedienungshebel 26 mit Blick auf die Zeichnung oben nach rechts zu schwenken, was der normalen Schwenkrichtung für Heben entspricht, wird die Feder 70 zwischen dem Halteelement 78 und dem Kolbenboden 86 zunächst zusammengedrückt. Dabei legt der zweite Teil 68 in dem ersten Teil 66 einen Weg zurück, der durch die Federkraft der Feder 70 bestimmt wird und der so groß gewählt sein muß, daß die Übertragung dieses Weges mittels des Zugmittels 94 auf das Sperrglied 92 zu dessen Verschwenken in einem Maß führen muß, das ausreicht, um den Anschlag 102 in die Aussparung 36 einzuschwenken. Siehe hierzu auch Figur 3. Nachdem das Verbindungsglied 32 nun in sich starr ist, kann über den Nebenbedienungshebel 60 eine Schwenkbewegung des Hauptbedienungshebels 26 hervorgerufen werden. Dessen Schwenkbewegung wird aber dann beendet, wenn der Anschlag 102 an dem in Figur 2 rechten Ende der Aussparung 36 anschlägt. Der Abstand des Hauptbedienungshebels 26 zu diesem Ende entspricht dann der Länge des Regelbereiches 56, was bedeutet, daß keine Hubbewegung des Krafthebers hervorgerufen werden kann, da sich der Hauptbedienungshebel 26 noch in dem Leerbereich 54 befindet. Es kann also nicht passieren, daß die Person den Hauptbedienungshebel 26 in den Regelbereich 56 bringt und somit bewirkt, daß sich die unteren Lenker 16 unkontrolliert nach oben bewegen und dabei evtl. die Scheibenegge einseitig anheben und die Scheibenegge oder sogar die danebenstehende Person beschädigt bzw. verletzt werden. Die Person erkennt jedoch an dem Widerstand zum weiteren Bewegen des Nebenbedienungshebels 60, daß ein Anheben der unteren Lenker 16 bei der gewählten Regelfunktion, nämlich der Zugwiderstandsregelung, nicht möglich ist. Die Person muß nach alledem wieder auf den Ackerschlepper 10 aufsteigen und als Regelart die Lageregelung wählen, wobei sie, um zu vermeiden, daß die unteren Lenker 16 beim wechsel der Regelungsart auf eine Höhe angehoben werden, die der gerade gegebenen Stellung des Hauptbedienungshebels 26 in der Aussparung 36 beim Übergang von dem Leerbereich 54 zu dem Regelbereich 56 in der Lageregelung entspricht, den Hauptbedienungshebel 26 so weit auf den Anfang der Aussparung 36 zubewegen sollte, wie er sich befand, als die unteren Lenker 16 anfänglich von der Kabine 12 aus angehoben wurden.

Danach steigt die Person wieder ab und kann über den Nebenbedienungshebel 60 nun den Hauptbedienungshebel 26 proportional und über nahezu seinen gesamten Schwenkweg verschwenken. Dieses Sicherheitsmerkmal, also das Verhindern des Anhebens der unteren Lenker 16, solange als Regelart die Zugwiderstandsregelung gewählt ist, wird dann überflüssig, wenn von vornherein als Regelart die Lageregelung gewählt worden war und dann jedes Verschwenken des Nebenbedienungshebels 60 direkt das Anheben der unteren Lenker 16 bewirkt.

Aus dem Vorbeschriebenen und aus Figur 2 geht auch hervor, daß für den Fall, daß die unteren Lenker 16 zu hoch angehoben worden sind, wobei sich der Hauptbedienungshebel 26 auch in dem Regelbereich 56 befinden darf, und zwar ohne Rücksicht auf die gewählte Regelungsart, eine Abwärtsbewegung der unteren Lenker 16 über den Nebenbedienungshebel 60 immer eingeleitet werden kann, was sich als sehr vorteilhaft erweist. Es wäre auch möglich, unterhalb der Kulisse 38 seitlich der Aussparung 36 am Beginn des Regelbereiches Anschläge anzubringen, gegen die ein Winkelhebel, der wie der Sperrmechanismus 90 betätigt wird, beim Verschwenken des Hauptbedienungshebels 26 mittels des Nebenbedienungshebels 60 zur Anlage bringbar ist. Dies wäre ebenfalls ein hervorragendes Merkmal.

Der nun folgende Abschnitt bezieht sich auf ein weiteres Ausführungsbeispiel für eine Fernbetätigungseinrichtung 30.

Die Beschreibung des Ackerschleppers 10, dessen Kraftheber und der dazugehörigen Regelvorrichtung findet auch bei diesem Ausführungsbeispiel Anwendung. Dieses weitere Ausführungsbeispiel unterscheidet sich im wesentlichen von dem ersten Ausführungsbeispiel dadurch, daß das bisherige Verbindungsglied 32 immer starr und in seiner Länge unveränderlich ist und daß der bisherige Sperrmechanismus 90 entfällt und durch einen neuen Arretiermechanismus 112 mit einem angepaßten Hauptbedienungshebel 114, der in der Funktion in bezug auf den Kraftheber dem bisherigen Hauptbedienungshebel 26 entspricht, ersetzt wird. Das Verbindungsglied 32 wird jedoch nach wie vor über einen am rückwärtigen Außenbereich 28 des Ackerschleppers 10 angebrachten Nebenbedienungshebel 60 beaufschlagt.

Der Hauptbedienungshebel 114 weist ebenfalls die untere Bohrung 46 und den unteren Stift 52 zum schwenkbaren Anlenken eines nicht gezeigten Verbindungsgliedes auf, das ein Bowdenzug, eine Stange oder dergleichen sein kann. Die obere Bohrung 42 ist ebenfalls vorhanden; sie befindet sich jedoch oberhalb der Aussparung 36 und nimmt wiederum den oberen Stift 48 in sich auf. Die mittlere Bohrung 44 und der mittlere Stift 50 entfallen.

Der Arretiermechanismus 112 setzt sich aus einer Griffhülse 116, einem Teleskoprohr 118, einem Anschlag 120, dem oberen Stift 48 und einer Feder 124 zusammen.

Die Griffhülse 116 ist in diesem Ausführungsbeispiel auf dem über die Kulisse 38 überstehenden Abschnitt des Hauptbedienungshebels 114 angeordnet und mit einer rechteckigen, zylindrischen Federkammer 126 versehen, die sich nach unten öffnet.

Das Teleskoprohr 118 weist Innenabmessungen auf, die geringfügig größer sind als die Außenabmessungen des Hauptbedienungshebels 114, so daß das Teleskoprohr 118 gleitend auf dem Hauptbedienungshebel 114 geführt ist. Die Außenabmessungen des Teleskoprohrs 118, zumindest in dessen oberen, also dem der Griffhülse 116 zugelegenen Bereich, entsprechen den Innenabmessungen der Federkammer 126, so daß das Teleskoprohr 118 in die Federkammer 126 einsetzbar ist und beide in einem beide überlappenden Bereich miteinander verklebt oder formschlüssig verbunden werden können. Die Breite im unteren Bereich ist jedoch geringfügig kleiner als die Breite der Aussparung 36, so daß das Teleskoprohr 118 an seinem unteren Bereich auch in der Aussparung 36 geführt werden kann. An zwei Breitseiten 128 des Teleskoprohrs 118, also an den zu den Längsseiten der Aussparung 36 parallelen Seiten, ist jeweils ein Längsschlitz 130 vorgesehen, die sich in der Längsrichtung des Hauptbedienungshebels 114 erstrecken und die in sich den oberen Stift 48 gleitend aufnehmen. Gegebenenfalls können in dem in die Aussparung 36 eingreifenden unteren Bereich des Teleskoprohrs 118 die Breitseiten 128 entfernt werden, so daß die Aussparung 36 in ihrer Breite geringer gehalten werden kann.

Der als Arretiernase ausgebildete Anschlag 120 ist an einer dem Regelbereich 56 zugelegenen und die Breitseiten 128 verbindenden Schmalseite 132 angebracht und weist eine Länge auf, die der Länge des Regelbereiches 56 in der Aussparung 36 entspricht. Die Breite des Anschlages 120 entspricht der Breite der Aussparung 36, so daß sie in diese eintreten kann.

Die Feder 124 ist in der Federkammer 126 untergebracht und stützt sich zwischen dem oberen Ende des Hauptbedienungshebels 114 und dem inneren Ende der Federkammer 126 ab. In diesem Ausführungsbeispiel ist die Feder 124 als rechteckige Spiraldruckfeder ausgeführt. Sie könnte aber auch aus mehreren übereinander geschichteten Blattfedern zusammengesetzt werden, aus einer runden Schraubendruckfeder oder aus einem kompressiblen Material wie Gummi gebildet sein. Die Federkonstante sollte so bemessen sein, daß zum Zusammendrücken der Feder 124 mit der Hand ein zwar merklich spürbarer, aber nicht allzu großer Widerstand überwunden werden muß. Die Feder 124 kann unter geringfügiger Vorspannung in die Federkammer 126 eingesetzt werden.

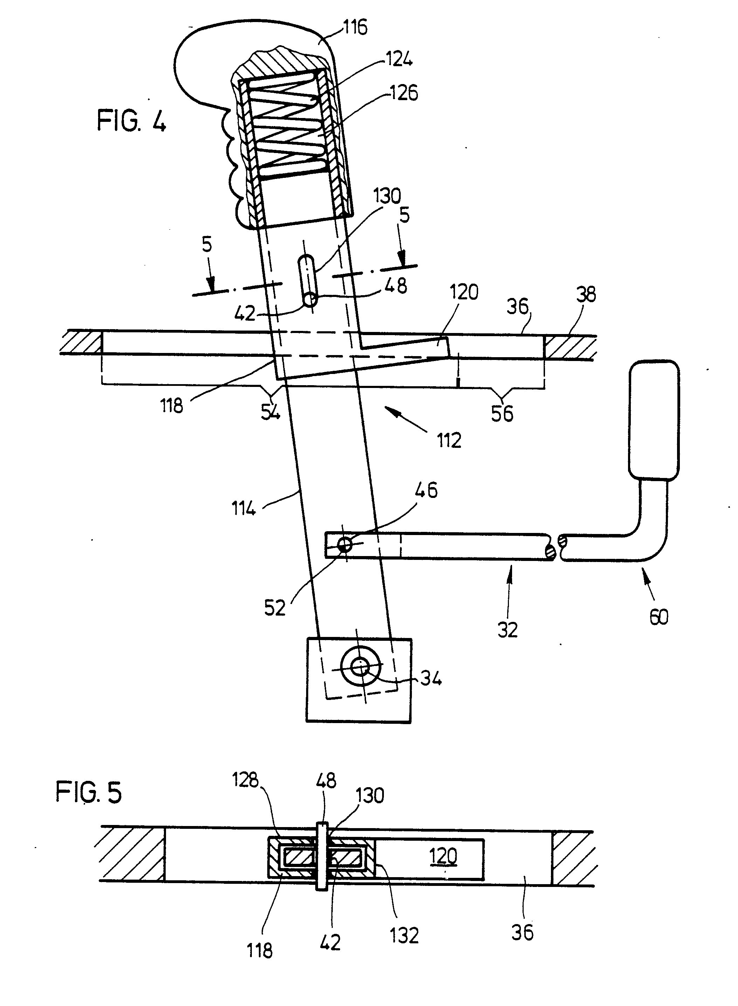

Die Montage dieses Arretiermechanismusses 112 erfolgt derart, daß zunächst die Griffhülse 116 starr mit dem Teleskop rohr 118 verbunden und anschließend die Feder 124 in die Federkammer 126 eingesetzt wird. Daraufhin wird das Teleskoprohr 118 mit der Griffhülse 116 und der Feder 124 über den Hauptbedienungshebel 114 gestülpt. Bei richtiger Federlängenbemessung darf nun im unbelasteten Zustand maximal die obere Bohrung 42 am unteren Rand des Längsschlitzes 130 erscheinen. Anschließend wird die aus der Griffhülse 116 und dem Teleskoprohr 118 gebildete Einheit entgegen der Wirkung der Feder 124 auf den Hauptbedienungshebel 114 zugedrückt, so daß der obere Stift 48 durch die beiden Längsschlitze 130 und die obere Bohrung 42 hindurchgesteckt werden kann. Es ist dabei darauf zu achten, daß der obere Stift 48 etwa mittels einer Preßpassung gehalten wird und nicht aus der oberen Bohrung 42 von alleine entfallen kann. In dieser Stellung nun, die der normalen Stellung entspricht, befindet sich der Anschlag 120 genau in der Aussparung 36 und verhindert somit, falls der Hauptbedienungshebel 114 mit Blick auf Figur 4 nach rechts geschwenkt wird, daß er bis in den Regelbereich 56 geführt werden kann. Um den Hauptbedienungshebel 114 in den Regelbereich 56 führen zu können, muß die Griffhülse 116 mit der Feder 124 stets durch eine Bedienungsperson niedergedrückt werden, wozu es deren Willen bedarf. Es wird somit verhindert, daß die Griffhülse 116 von dem rückwärtigen Außenbereich 28 aus, der außerhalb der Griffbereichs des Hauptbedienungshebels 114 liegt, niedergedrückt und somit der Arretiermechanismus 112 in seiner Funktion ausgeschaltet wird.

Eine Beaufschlagung des Hauptbedienungshebels 114 über den Nebenbedienungshebel 60 kann also nur zu dessen Verschwenkung bis zu dem Regelbereich 56 führen. Eine weitere Verschwenkung wird durch die Anlage des Anschlages 120 an dem rechten Ende der Aussparung 36 verhindert. Der Vorgang des Ankuppelns eines Gerätes, wie er zuvor beschrieben worden ist, läuft bei diesem Ausführungsbeispiel analog ab.

## Ansprüche

1. Fernbetätigungseinrichtung (30), insbesondere für einen Kraftheber eines Ackerschleppers - (10), mit einem Hauptbedienungshebel (26, 114) und einem Nebenbedienungshebel (60), die über ein Verbindungsglied (32) miteinander verbunden sind, wobei ein Anschlag (102, 120) zur Begrenzung des Weges des Hauptbedienungshebels (26, 114) vorgesehen ist, dadurch gekennzeichnet, daß der Anschlag (102, 120) in die Bewegungsbahn des Hauptbedienungshebels (26, 114) einführbar ist.

2. Fernbetätigungseinrichtung nach Anspruch 1, wobei der Hauptbedienungshebel (26, 114) in einer Kulisse (38) mit einer Aussparung (36) geführt ist, dadurch gekennzeichnet, daß der Anschlag (102, 120) an dem Hauptbedienungshebel - (26, 114) beweglich angebracht und in die Aussparung (102, 120) einfügbar ist.

3. Fernbetätigungseinrichtung nach Anspruch 1, dadurch gekennzeichnet, daß der Anschlug - (102) in Abhängigkeit von der Stellung oder einem Bewegungszustand des Nebenbedienungshebels - (60) bedienbar ist.

4. Fernbetätigungseinrichtung nach Anspruch 2, dadurch gekennzeichnet, daß der Anschlag - (120) ständig in eine den Weg des Hauptbedienungshebels (114) begrenzende Stellung gedrängt angeordnet ist und lediglich vom Hauptbedienungshebel (114) aus aus seiner den Weg begrenzenden Stellung bringbar ist.

5. Fernbetätigungseinrichtung nach Anspruch 3, dadurch gekennzeichnet, daß das Verbindungsglied (32) einen ersten und einen zweiten Teil (66 und 68) enthält, die zwischen einer ersten und einer zweiten Stellung relativ zueinander beweglich sind, daß der dem Nebenbedienungshebel (60) zugeordnete erste Teil (66) mit dem Anschlag (102) verbunden ist und daß das Maß der Relativbewegung dem Maß zum Einfügen des Anschlages (102) in die Bewegungsbahn des Hauptbedienungshebels (26) entspricht.

6. Fernbetätigungseinrichtung nach Anspruch 5, dadurch gekennzeichnet, daß zwischen dem ersten und dem zweiten Teil (66 und 68) eine Feder - (70) wirkt, die die beiden Teile (66, 68) in eine Stellung zueinander bringt, derart, daß der Anschlag (102) in die den Weg des Hauptbedienungshebels (26) begrenzende Stellung gelangt, wenn der Nebenbedienungshebel (60) betätigt wird.

7. Fernbetätigungseinrichtung nach Anspruch 6, dadurch gekennzeichnet, daß der erste Teil (66) endseitig als Zylinder ausgebildet ist und den zweiten endseitig als Kolben ausgebildeten Teil (68) teleskopartig übergreift, daß zwischen den ersten Teil (66) und den zweiten Teil (68) die Feder (70) eingesetzt ist, die den zweiten Teil (68) in den ersten Teil (66) drückt, daß der Anschlag (102) als Winkelhebel ausgebildet und schwenkbar an dem Hauptbedienungshebel (26) angebracht ist und daß sich zwischen dem Anschlag (102) und dem ersten Teil (66) ein Zugmittel (94) erstreckt.

8. Fernbetätigungseinrichtung nach Anspruch 7, dadurch gekennzeichnet, daß der zweite Teil - (68) eine Kolbenstange (84) und einen Kolbenboden (86) aufweist, daß der erste Teil (66) an dem die Kolbenstange (84) aufnehmenden Ende mit einem Halteelement (78) versehen ist und daß sich die Feder (70) zwischen dem Halteelement (78) und dem Kolbenboden (86) erstreckt.

9. Fernbetätigungseinrichtung nach Anspruch 4, dadurch gekennzeichnet, daß der Anschlag - (120) an einer den Hauptbedienungshebel (114) teleskopartig übergreifen den Griffhülse (116) angeordnet ist, die zwischen einer ersten und einer zweiten Stellung auf dem Hauptbedienungshebel - (114) beweglich ist und entgegen der Wirkung einer Feder (124) aus der den Weg des Hauptbedienungshebels (114) begrenzenden Stellung in der Aussparung (36) bewegbar ist.

10. Fernbetätigungseinrichtung nach Anspruch 9, dadurch gekennzeichnet, daß die Griffhülse - (116) einen Längsschlitz (130) und der Hauptbedienungshebel (114) einen Stift (48) aufweisen, wobei der Stift (48) in dem Längsschlitz (130) aufgenommen ist, und die Ausbildung und Anordnung des Längsschlitzes (130) die erste und die zweite Stellung der Griffhülse (116) bestimmen.

11. Fernbetätigungseinrichtung nach Anspruch 9, für eine eine Lage-, eine Zugwiderstands-und eine Mischregelung aufweisende Regelvorrichtung des Krafthebers des Ackerschleppers (10), wobei in der Aussparung (36) ein Regelbereich (56) für die Zugwiderstands-und die Mischregelung vorgesehen ist, dadurch gekennzeichnet, daß die Griffhülse - (116) an einem unteren und der Aussparung (36) zugewandten Endbereich den Anschlag (120) aufweist, der in seiner Länge dem Regelbereich (56) entspricht.

12. Fernbetätigungseinrichtung nach Anspruch 7, für eine eine Lage-, eine Zugwiderstands-und eine Mischregelung aufweisende Regelvorrichtung des Krafthebers des Ackerschleppers (10), wobei in der Bewegungsbahn des Hauptbedienungshebels ein Regelbereich (56) für die Zugwiderstands-und die Mischregelung vorgesehen ist, dadurch gekennzeichnet, daß der Anschlag (102) in seiner Länge dem Regelbereich (56) entspricht.

FIG.1

# FIG.2

# FIG.3

FIG. 4

FIG. 5